# EUROPÄISCHE PATENTSCHRIFT

(11) **EP 2 105 018 B1**
(45) Veröffentlichungstag und Bekanntmachung des Hinweises auf die Patenterteilung: **22.09.2010**
(21) Anmeldenummer: 07821336.0
(22) Anmeldetag: 15.10.2007
(51) Int. Cl.: H04N 7/18

(54) **ANZEIGE ZUR DARSTELLUNG EINES VERLAUFS**
DISPLAY FOR DISPLAYING PROGRESS
AFFICHEUR POUR REPRÉSENTER UNE ÉVOLUTION

(30) Priorität: 14.12.2006 DE 102006059065
(43) Veröffentlichungstag der Anmeldung: 30.09.2009
(73) Patentinhaber: Robert Bosch GmbH, 70442 Stuttgart (DE)
(72) Erfinder: BUSCH, Hans-Juergen, 91186 Buechenbach (DE)
(86) Internationale Anmeldenummer: PCT/EP2007/060969
(87) Internationale Veröffentlichungsnummer: WO 2008/071482

(56) Entgegenhaltungen:
- EP-A- 1 450 559
- WO-A-03/001809
- WO-A-2004/068855
- US-A- 6 011 901
- US-A1- 2006 045 470

## Beschreibung

Die Erfindung betrifft eine Anzeige zur Darstellung eines Verlaufs eines Aufzeichnungsvorgangs, eine Vorrichtung zur Aufbereitung von Videodaten, ein Verfahren zur Aufbereitung von Videodaten, ein Computerprogramm und ein Computerprogrammprodukt.

### Stand der Technik

Videoüberwachungsvorrichtungen bzw. -systeme sind dazu ausgebildet, über längere Zeiträume große Mengen an Videodaten aufzuzeichnen. Mit den Videodaten werden Ereignisse, die bei der Videoüberwachung erfasst werden, festgehalten. Da es in der Regel viel zu aufwendig ist, die Menge an Videodaten zu sichten, werden die anfallenden Videodaten von Anwendern im allgemeinen nur sporadisch und/oder bei besonderen Vorkommnissen angesehen.

Ein Verfahren zur Aufzeichnung von Video- und Audiodaten ist aus der Druckschrift DE 103 01 455 A1 bekannt. Hier ist vorgesehen, dass ein Datenspeicher einer Aufnahmevorrichtung mit mindestens einer Aufzeichnungsvorrichtung, die eine größere Speicherkapazität als der Datenspeicher der Aufnahmevorrichtung aufweist, verbunden ist. Des weiteren werden die Daten zwischen dem Datenspeicher und der mindestens einen Aufzeichnungsvorrichtung ausgetauscht, so dass mittels der Aufzeichnungsvorrichtung ein virtueller Datenspeicher für die Aufnahmevorrichtung gebildet wird.

Die Druckschrift EP 1 450 559 A1 betrifft ein System zum Verwalten von Videoinformationen. Dieses System umfasst eine Einrichtung zum Speichern und Analysieren der Videoinformationen, wobei bei der Analyse Analyse-Algorithmen verwendet werden. Hierbei ist vorgesehen, dass dynamische Videosignale eine zeitliche Auflösung aufweisen, die einer Rate von Frames bzw. Rahmen der Videosignale entsprechen.

Ein System zur komprimierten digitalen Aufzeichnung und Wiedergabe von Videos ist aus der Druckschrift US 6 011 901 bekannt. Dieses System ist dazu ausgebildet, komprimierte Videobilder, die von verschiedenen Kameras bereitgestellt werden, zu verarbeiten. Hierbei werden unterschiedliche Auflösungen für die Videodaten ausgewählt, um Speicherplatz des Systems einzusparen.

Ein Verfahren und ein System zur Bereitstellung von Informationen über aufgenommene mediale Inhalte werden in der Druckschrift US 2006/0045470 beschrieben. Hierbei umfasst das System ein Fortschrittsbalken, der eine Dauer des aufgenommenen medialen Inhalts repräsentiert. Dabei weist dieser Fortschrittsbalken eine erste und eine zweite Farbe auf. Mit dem Fortschrittsbalken kann ein Abschnitt des aufgenommenen medialen Inhalts, der von einem Nutzer angesehen wird, graphisch repräsentiert werden.

### Offenbarung der Erfindung

Die Erfindung betrifft eine Anzeige zur Darstellung eines Verlaufs eines Aufzeichnungsvorgangs. Die Anzeige stellt Videodaten von Ereignissen, die bei dem Aufzeichnungsvorgang aufgezeichnet werden, in zeitliche gestaffelter Auflösung dar.

Mit der Anzeige oder einem entsprechenden graphischen Anzeigeelement kann ein Operator oder ein Nutzer der Anzeige den Verlauf des Aufzeichnungsvorgangs auf einen Blick erfassen.

Somit ist eine kontinuierliche Überwachung des Aufzeichnungsvorgangs und der dabei erfassten Ergebnisse möglich. Die Gefahr unwiederbringlicher Verluste von Aufzeichnungen von Ereignissen kann somit reduziert werden. Über die Anzeige kann in Ausgestaltung ein Verlauf von Videodaten kompakt und übersichtlich dargestellt werden. Derartige Videodaten werden typischerweise über einen längeren Zeitraum aufgezeichnet.

In einer Ausgestaltung stellt die Anzeige den Verlauf und/oder die Videodaten in zeitlich gestaffelter Auflösung dar. Dies bedeutet, dass während eines gesamten Zeitraums, während dem der Aufzeichnungsvorgang vorgenommen wird, bestimmte Zeitabschnitte oder -intervalle, die zu unterschiedlichen Zeitpunkten erfasst werden, unter Berücksichtigung des Zeitraums und/oder des Zeitpunkts in unterschiedlicher, geeigneter Auflösung dargestellt und somit bereitgestellt werden. Somit können für eine Sichtung der Videodaten durch geeignete Wahl der Auflösung zeitabhängig Prioritäten gesetzt werden.

Die Anzeige kann in einer weiteren Ausgestaltung ein übersichtliches Diagramm aufweisen, das dem Anwender den Verlauf des Aufzeichnungsvorgangs unter Berücksichtigung qualitativer und/oder quantitativer Aspekte bereitstellt. In dem Diagramm kann bspw. eine Häufigkeit der Videodaten und/oder Ereignisse in Abhängigkeit der Zeit dargestellt werden. Zeitabschnitte, die für die Überwachung besonders interessant sind, können in der Grafik höher aufgelöst dargestellt werden. Dies bedeutet in einer Ausführung der Anzeige, dass die Anzeige die Videodaten von zeitlich näherliegenden Ereignissen mit einer höheren Auflösung als Videodaten von zeitlich weiter zurückliegenden Ereignissen darstellt. Dabei kann entlang einer Zeitachse die Auflösung umgekehrt proportional zu einer zeitlichen Differenz zwischen diesem Zeitpunkt und einem Zeitpunkt der Darstellung aufgetragen sein. Ein Maß für die Auflösung kann zeitlich kontinuierlich oder innerhalb von Zeitabschnitten diskret bemessen sein. Im Rahmen der Ausgestaltung der Erfindung bietet sich an, dass die Anzeige die Videodaten umgekehrt logarithmisch zur zeitlichen Auflösung darstellt.

Die Erfindung betrifft zudem eine Vorrichtung zur Aufbereitung von Videodaten zu Ereignissen eines Aufzeichnungsvorgangs, die dazu ausgebildet ist, die Videodaten in zeitlich gestaffelter Auflösung bereitzustellen.

Dabei kann diese Vorrichtung als eine Komponente eine Datenverarbeitungseinrichtung zur Verarbeitung von Videodaten aufweisen. Außerdem kann vorgesehen sein, dass die Vorrichtung eine Anzeigevorrichtung, in der Regel einen Monitor, zur Bereitstellung der Anzeige zur Darstellung des Verlaufs des Aufzeichnungsvorgangs aufweist. Demnach sind die Vorrichtung und insbesondere die Anzeigevorrichtung dazu ausgebildet, die Videodaten als eine Anzeige, gegebenenfalls auf einer Benutzeroberfläche, darzustellen.

Des weiteren kann die Vorrichtung eine Mehrkanalvorrichtung aufweisen, die dazu ausgebildet ist, die Videodaten des Aufzeichnungsvorgangs in einer Übersichtsdarstellung für alle Kanäle akkumuliert darzustellen. Hierbei können bedarfsweise für jeden Kanal Detailinformationen bereitgestellt werden.

In Ausgestaltung ist vorgesehen, dass die Vorrichtung mehrere Kanäle aufweist, die dazu ausgebildet sind, die Videodaten bereitzustellen. Die Vorrichtung ist regelmäßig mit mindestens einer Kamera, insbesondere einer Videokamera, verbunden, mit der während des Aufzeichnungsvorgangs die Videodaten zum Erfassen der Ereignisse bereitgestellt werden.

Die Erfindung betrifft zudem ein Verfahren zur Darstellung eines Verlaufs eines Aufzeichnungsvorgangs, bei dem Videodaten von Ereignissen bei dem Aufzeichnungsvorgang aufgezeichnet werden, und bei dem die Videodaten in zeitlich gestaffelter Auflösung bereitgestellt werden.

Dabei wird der Verlauf in einer Anzeige oder einem entsprechenden Anzeigeelement abgebildet. In einer beispielhaften Ausführung des Verfahrens werden Videodaten von zeitlich näherliegenden Ereignissen mit einer höheren Auflösung als Videodaten von zeitlich weit zurückliegenden Ereignissen dargestellt.

Zudem ist es möglich, dass die Videodaten des Aufzeichnungsvorgangs in einer Übersichtsdarstellung für alle Kanäle einer Mehrkanalvorrichtung akkumuliert dargestellt werden. Dabei werden für jeden Kanal der Mehrkanalvorrichtung Detailinformationen bereitgestellt.

In weiterer Ausgestaltung kann eine Datenrate, insbesondere eine Datenrate der Videodaten, dargestellt werden. Bei einer Ausführung des Verfahrens können ergänzend Aufzeichnungsfehler des Aufzeichnungsvorgangs oder der Videodaten dargestellt werden.

Einzelne Schritte des erfindungsgemäßen Verfahrens können mit einzelnen Komponenten der erfindungsgemäßen Vorrichtung und/oder der erfindungsgemäßen Anzeige ausgeführt werden. Einzelne Funktionen, die durch Komponenten der erfindungsgemäßen Vorrichtung durchführbar sind, können in Ausgestaltung als weitere Schritte des erfindungsgemäßen Verfahrens geeignet sein.

Die Erfindung betrifft zudem ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere in einer erfindungsgemäßen Vorrichtung, ausgeführt wird.

Das erfindungsgemäße Computerprogrammprodukt mit Programmcodemitteln, die auf einem cumputerlesbaren Videodatenträger gespeichert sind, ist dazu ausgebildet, alle Schritte eines erfindungsgemäßen Verfahrens durchzuführen, wenn das Computerprogramm auf einem Computer oder einer entsprechenden Recheneinheit, insbesondere einem Steuergerät in einer erfindungsgemäßen Vorrichtung, ausgeführt wird.

Die zeitlich gestaffelte Auflösung und insbesondere die umgekehrt logarithmische zeitliche Auflösung des Verlaufs des Aufzeichnungsvorgangs ermöglicht, dass zeitlich näher liegende Ereignisse mit höherer Auflösung dargestellt werden können als weiter in der Vergangenheit liegende Ereignisse oder Vorgänge. Außerdem ist es mit der Anzeige möglich, besondere Ereignisse oder Fehlerzustände farblich zu markieren und eine Aufzeichnungsrate der Videodaten und/oder Ereignisse als Kurve darzustellen. Eine gewählte Darstellung innerhalb der Anzeige kann in einer Übersichtsdarstellung für alle Kanäle des Mehrkanalsystems akkumuliert dargestellt werden. Zusätzlich kann vorgesehen sein, dass die Darstellungen als Detailinformation für jeden einzelnen Kanal zur Verfügung stehen. In einer akkumulierten Darstellung werden alle Aufzeichnungsraten sowie die Summe der Aufzeichnungsraten aller Kanäle angezeigt, wobei sämtliche Fehlerzustände farblich überlagert werden können.

Die Anzeige ist somit bspw. als Bestandteil einer Benutzeroberfläche ausgebildet, die zur Auswertung von Videodaten des Aufzeichnungsvorgangs benutzt wird.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im folgenden unter Bezugnahme auf die Zeichnungen ausführlich beschrieben.

### Kurze Beschreibung der Zeichnungen

Figur 1 zeigt in schematischer Darstellung eine Ausführungsform der erfindungsgemäßen Vorrichtung mit einer ersten Ausführungsform der erfindungsgemäßen Anzeige.
Figur 2 zeigt eine zweite Ausführungsform der erfindungsgemäßen Anzeige.

### Ausführungsformen der Erfindung

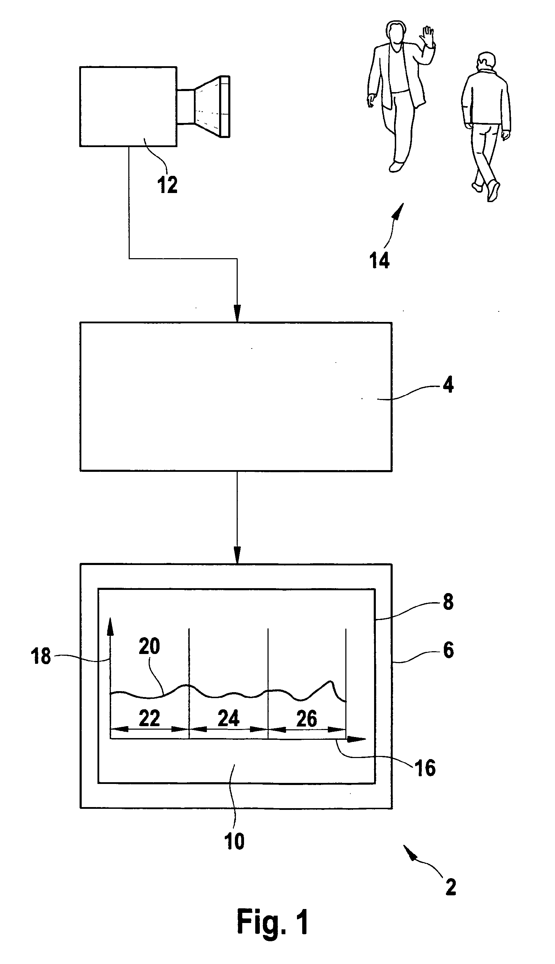

Die in Figur 1 in schematischer Darstellung gezeigte erfindungsgemäße Vorrichtung 2 umfasst eine Datenverarbeitungseinrichtung 4 mit einer Recheneinheit, die mit einer Anzeigevorrichtung 6 verbunden ist. Diese hier als Monitor ausgebildete Anzeigevorrichtung 6 weist eine Benutzeroberfläche 8 auf, auf der eine erste Ausführungsform der erfindungsgemäßen Anzeige 10 dargestellt ist. Des weiteren ist vorgesehen, dass die Datenverarbeitungseinrichtung 4 der Vorrichtung 2 mit einer Videokamera 12 verbunden ist. Diese Videokamera 12 ist dazu ausgebildet, Ereignisse zu erfassen und von diesen Ereignissen Videodaten bereitzustellen. Bei den Ereignissen kann es sich bspw. um Aktionen von Personen 14 handeln, die sich innerhalb eines Szenarios, das von der Videokamera 12 überwacht wird, aufhalten.

Die Videodaten werden von der Videokamera 12 zu der Datenverarbeitungseinrichtung 4 übermittelt. In vorliegender Ausführungsform ist die Datenverarbeitungseinrichtung 4 dazu ausgebildet, die Videodaten unter Berücksichtigung von Zeiträumen sowie Zeitpunkten, während denen der Aufzeichnungsvorgang erfolgt, derart zu bearbeiten, dass die Videodaten zu den Ereignissen in zeitlich gestaffelter Auflösung bereitgestellt werden.

Die erfindungsgemäße Anzeige 10 innerhalb der Benutzeroberfläche, auf der Anzeigevorrichtung 6 der Vorrichtung 2, ist zur Darstellung eines Verlaufs des Aufzeichnungsvorgangs ausgebildet. Die Anzeige 12 stellt die Videodaten von Ereignissen, die bei dem Aufzeichnungsvorgang aufgezeichnet werden, in zeitlich gestaffelter Auflösung dar. Ein in der Anzeige 10 dargestelltes Diagramm weist eine horizontal orientierte Zeitachse 16 auf, über die entlang einer vertikal orientierten Ereignisachse 18 eine Häufigkeit von Ereignissen als Kurve 20 dargestellt ist. Die Zeitachse 16 ist in ein erstes Zeitintervall 22, ein zweites Zeitintervall 24 und ein drittes Zeitintervall 26 unterteilt. In vorliegender Ausführungsform ist vorgesehen, dass die über die Kurve 20 aufgetragenen Videodaten in zeitlich gestaffelter Auflösung dargestellt sind.

Dies bedeutet, dass die drei Abschnitte 22, 24, 26 entlang der Zeitachse 16 dieselben Längen aufweisen. Allerdings umfassen diese drei Abschnitte 22, 24, 26 unterschiedliche lange Zeitintervalle. So ist hier vorgesehen, dass der erste Abschnitt 22 einen Zeitraum von einem Tag, der zweite Abschnitt 24 einen Zeitraum von neun Tagen und der dritte Abschnitt 26 einen Zeitraum von 90 Tagen umfasst. Somit sind die Videodaten in der in Figur 1 dargestellten Anzeige 10 in logarithmischer zeitlicher Auflösung dargestellt.

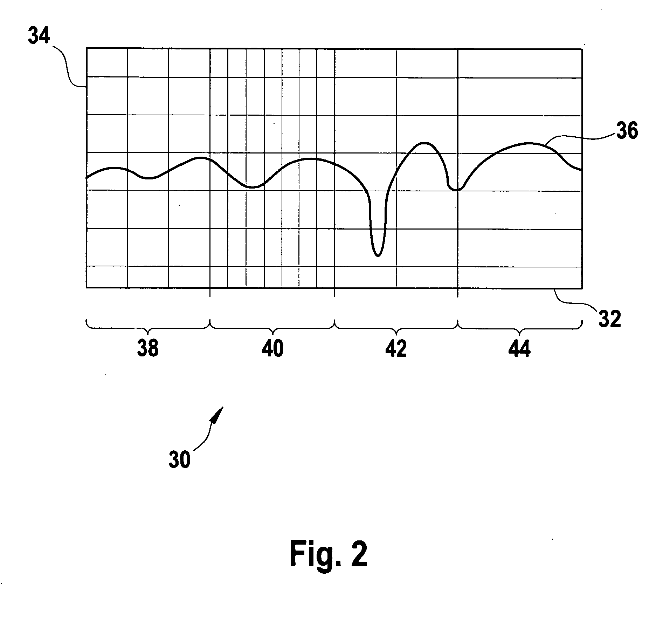

Figur 2 zeigt eine zweite Ausführungsform einer Anzeige 30, die ein Diagramm umfasst. Dieses Diagramm umfasst eine horizontal orientierte Zeitachse 32 sowie eine vertikal orientierte Ereignisachse 34 zur Darstellung einer Häufigkeit von Videodaten zu den Ereignissen, die während des Aufzeichnungsvorgangs aufgezeichnet werden.

Wie in Figur 1 sind auch hier die Videodaten als Kurve 36 dargestellt. Die Anzeige 30 ist zur Darstellung eines Verlaufs der Kurve 36 des Aufzeichnungsvorgangs ausgebildet. Dabei stellt die Anzeige 30 die Videodaten von Ereignissen, die bei dem Aufzeichnungsvorgang aufgezeichnet werden, in zeitlich gestaffelter Auflösung dar. Hierzu ist in der vorliegenden Ausgestaltung die Zeitachse 32 in einen ersten Abschnitt 38, einen zweiten Abschnitt 40, einen dritten Abschnitt 42 und einen vierten Abschnitt 44 aufgeteilt. Zur Bereitstellung der Auflösung umfasst der erste Abschnitt 38 einen Zeitraum von drei Monaten, der zweite Abschnitt 40 einen Zeitraum von einer Woche, der dritte Abschnitt 42 einen Zeitraum von einem halben Tag und der vierte Abschnitt 44 einen Zeitraum von einer Stunde. Somit werden mit der hier vorliegenden Anzeige 30 die Videodaten von zeitlich näher liegenden Ereignissen, also von Ereignissen die sich innerhalb der letzten Stunde ergeben haben, mit einer höheren Auflösung als Videodaten von zeitlich weiter zurückliegenden Ereignissen dargestellt.

## Patentansprüche

1. Anzeige zur Darstellung eines Verlaufs eines Aufzeichnungsvorgangs, die Videodaten von Ereignissen, die bei dem Aufzeichnungsvorgang aufgezeichnet werden, in zeitlich gestaffelter Auflösung darstellt, **dadurch gekennzeichnet, dass** die Anzeige (10, 30) die Videodaten in umgekehrt logarithmischer zeitlicher Auflösung darstellt, wobei ein in der Anzeige (10, 30) dargestelltes Diagramm eine Zeitachse (16, 32) aufweist, wobei Abschnitte (22, 24, 26, 38, 40, 42, 44) entlang der Zeitachse (16, 32) dieselben Längen aufweisen, und wobei diese Abschnitte (22, 24, 26, 38, 40, 42, 44) unterschiedlich lange Zeitintervalle umfassen.

2. Anzeige nach Anspruch 1, die Videodaten von zeitlich näherliegenden Ereignissen mit einer höheren Auflösung als Videodaten von zeitlich weiter zurückliegenden Ereignissen darstellt.

3. Vorrichtung zur Aufbereitung von Videodaten zu Ereignissen eines Aufzeichnungsvorgang, die dazu ausgebildet ist, die Videodaten in zeitlich gestaffelter Auflösung bereitzustellen, wobei die Vorrichtung (2) dazu ausgebildet ist, die Videodaten über eine Anzeige (10, 30) nach Anspruch 1 oder 2 darzustellen.

4. Vorrichtung nach Anspruch 3, die mehrere Kanäle aufweist, die dazu ausgebildet sind, die Videodaten bereitzustellen.

5. Verfahren zur Darstellung eines Verlaufs eines Aufzeichnungsvorgangs, bei dem Videodaten von Ereignissen bei dem Aufzeichnungsvorgang aufgezeichnet werden, und bei dem die Videodaten in zeitlich gestaffelter Auflösung bereitgestellt werden, bei dem der Verlauf in einer Anzeige (10, 30) abgebildet wird, **dadurch gekennzeichnet, dass** die Videodaten in umgekehrt logarithmischer zeitlicher Auflösung dargestellt werden, wobei ein in der Anzeige (10, 30) dargestelltes Diagramm eine Zeitachse (16, 32) aufweist, wobei Abschnitte (22, 24, 26, 38, 40, 42, 44) entlang der Zeitachse (16, 32) dieselben Längen aufweisen, und wobei diese Abschnitte (22, 24, 26, 38, 40, 42, 44) unterschiedlich lange Zeitintervalle umfassen.

6. Verfahren nach Anspruch 5, bei dem Videodaten von zeitlich näherliegenden Ereignissen mit einer höheren Auflösung als Videodaten von zeitlich weiter zurückliegenden Ereignissen dargestellt werden.

7. Verfahren nach Anspruch 5 oder 6, bei dem die Videodaten des Aufzeichnungsvorgangs in einer Übersichtsdarstellung für alle Kanäle einer Mehrkanalvorrichtung akkumuliert dargestellt werden.

8. Verfahren nach Anspruch 7, bei dem für jeden Kanal Detailinformationen bereitgestellt werden.

9. Verfahren nach einem der Ansprüche 5 bis 8, bei dem eine Datenrate dargestellt wird.

10. Verfahren nach einem der Ansprüche 5 bis 9, bei dem Aufzeichnungsfehler dargestellt werden.

11. Computerprogramm mit Programmcodemitteln, um alle Schritte eines Verfahrens nach einem der Ansprüche 5 bis 10 durchzuführen, wenn das Computerprogramm auf einem Computer oder einer entsprechenden Recheneinheit, insbesondere in einer Vorrichtung (2) nach einem der Ansprüche 3 oder 4, ausgeführt wird.

12. Computerprogrammprodukt mit Programmcodemitteln, die auf einem computerlesbaren Videodatenträger gespeichert sind, um alle Schritte eines Verfahrens nach einem der Ansprüche 5 bis 10 durchzuführen, wenn das Computerprogramm auf einem Computer oder einer entsprechenden Recheneinheit, insbesondere in einer Vorrichtung (2) nach einem der Ansprüche 3 oder 4, ausgeführt wird.

## Claims

1. Display for displaying a course of a recording process, which displays video data of events recorded during the recording process with temporally staggered resolution, **characterized in that** the display (10, 30) displays the video data with inverted logarithmic temporal resolution, a diagram displayed in the display (10, 30) having a time axis (16, 32), sections (22, 24, 26, 38, 40, 42, 44) along the time axis (16, 32) having the same lengths, and said sections (22, 24, 26, 38, 40, 42, 44) comprising time intervals of different lengths.

2. Display according to Claim 1, which displays video data of temporally more recent events with a higher resolution than video data of temporally older events.

3. Device for conditioning video data with respect to events of a recording process, which is designed to provide the video data with temporally staggered resolution, the device (2) being designed to display the video data by means of a display (10, 30) according to Claim 1 or 2.

4. Device according to Claim 3, which has a plurality of channels that are designed to provide the video data.

5. Method for displaying a course of a recording process, wherein video data of events are recorded during the recording process, and wherein the video data are provided with temporally staggered resolution, wherein the course is represented in a display (10, 30), **characterized in that** the video data are displayed with inversely logarithmic temporal resolution, a diagram displayed in the display (10, 30) having a time axis (16, 32), sections (22, 24, 26, 38, 40, 42, 44) along the time axis (16, 32) having the same lengths, and said sections (22, 24, 26, 38, 40, 42, 44) comprising time intervals of different lengths.

6. Method according to Claim 5, wherein video data of temporally more recent events are displayed with a higher resolution than video data of temporally older events.

7. Method according to Claim 5 or 6, wherein the video data of the recording process are displayed in an accumulated manner in an overview representation for all the channels of a multichannel device.

8. Method according to Claim 7, wherein detail information is provided for each channel.

9. Method according to any of Claims 5 to 8, wherein a data rate is displayed.

10. Method according to any of Claims 5 to 9, wherein recording errors are displayed.

11. Computer program comprising program code means for carrying out all the steps of a method according to any of Claims 5 to 10 if the computer program is executed on a computer or a corresponding computing unit, in particular in a device (2) according to either of Claims 3 and 4.

12. Computer program product comprising program code means, stored on a computer-readable video data carrier, for carrying out all the steps of a method according to any of Claims 5 to 10 if the computer program is executed on a computer or a corresponding computing unit, in particular in a device (2) according to either of Claims 3 and 4.

## Revendications

1. Afficheur pour représenter une progression d'une opération d'enregistrement qui représente avec une résolution échelonnée dans le temps des données vidéo d'événements qui sont enregistrés lors de l'opération d'enregistrement, **caractérisé en ce que** l'afficheur (10, 30) représente les données vidéo dans une résolution logarithmique inverse dans le temps, un diagramme représenté sur l'afficheur (10, 30) présentant un axe de temps (16, 32), des portions (22, 24, 26, 38, 40, 42, 44) le long de l'axe de temps (16, 32) présentant les mêmes longueurs et ces portions (22, 24, 26, 38, 40, 42, 44) englobant des intervalles de temps de longueurs différentes.

2. Afficheur selon la revendication 1, qui représente des données vidéo des événements les plus proches dans le temps avec une résolution plus élevée que des données vidéo des événements plus éloignés dans le temps.

3. Dispositif pour préparer des données vidéo relatives à des événements d'une opération d'enregistrement, lequel est configuré pour délivrer les données vidéo avec une résolution échelonnée dans le temps, le dispositif (2) étant configuré pour représenter les données vidéo sur un afficheur (10, 30) selon la revendication 1 ou 2.

4. Dispositif selon la revendication 3, lequel présente plusieurs canaux qui sont configurés pour délivrer les données vidéo.

5. Procédé pour représenter une progression d'une opération d'enregistrement, selon lequel des données vidéo d'événements sont enregistrées lors de l'opération d'enregistrement et selon lequel les données vidéo sont délivrées avec une résolution échelonnée dans le temps, selon lequel la progression est représentée sur un afficheur (10, 30), **caractérisé en ce que** les données vidéo sont représentées dans une résolution logarithmique inverse dans le temps, un diagramme représenté sur l'afficheur (10, 30) présentant un axe de temps (16, 32), des portions (22, 24, 26, 38, 40, 42, 44) le long de l'axe de temps (16, 32) présentant les mêmes longueurs et ces portions (22, 24, 26, 38, 40, 42, 44) englobant des intervalles de temps de longueurs différentes.

6. Procédé selon la revendication 5, selon lequel des données vidéo des événements les plus proches dans le temps sont représentées avec une résolution plus élevée que des données vidéo des événements plus éloignés dans le temps.

7. Procédé selon la revendication 5 ou 6, selon lequel les données vidéo de l'opération d'enregistrement sont représentées cumulées dans une représentation d'ensemble pour tous les canaux d'un dispositif à plusieurs canaux.

8. Procédé selon la revendication 7, selon lequel des informations détaillées sont fournies pour chaque canal.

9. Procédé selon l'une des revendications 5 à 8, selon lequel un débit des données est représenté.

10. Procédé selon l'une des revendications 5 à 9, selon lequel des erreurs d'enregistrement sont représentées.

11. Programme informatique comprenant des moyens de code de programme pour exécuter toutes les étapes d'un procédé selon l'une des revendications 5 à 10 lorsque le programme informatique est exécuté sur un ordinateur ou sur une unité de calcul correspondante, notamment dans un dispositif (2) selon la revendication 3 ou 4.

12. Produit de programme informatique comprenant des moyens de code de programme qui sont enregistrés sur un support de données vidéo lisible sur ordinateur pour exécuter toutes les étapes d'un procédé selon l'une des revendications 5 à 10 lorsque le programme informatique est exécuté sur un ordinateur ou sur une unité de calcul correspondante, notamment dans un dispositif (2) selon la revendication 3 ou 4.
